# EUROPEAN PATENT SPECIFICATION

(11) **EP 2 866 329 B1**
(45) Date of publication and mention of the grant of the patent: **04.12.2019**
(21) Application number: 14187707.6
(22) Date of filing: 06.10.2014
(51) Int. Cl.: H02K 5/24, F02B 63/04, H02K 7/18, H02K 15/16

(54) **Electric power generating set**
Stromerzeugungssatz
Ensemble de génération d'énergie électrique

(30) Priority: 09.10.2013 IT BO20130553
(43) Date of publication of application: 29.04.2015
(73) Proprietor: Telair S.R.L., 48022 Lugo, RA (IT)
(72) Inventor: FABBRI, Raul, 48015 CERVIA RA (IT)
(74) Representative: Modiano, Micaela Nadia

(56) References cited:
- EP-A1- 1 666 785
- JP-A- H09 217 632
- JP-A- 2004 011 490

## Description

The present invention relates to an electric power generating set.

Currently, vehicles such as campers, caravans, truck campers and the like are provided usually with electric power generating sets, i.e., with devices capable for example of recharging electric batteries in order to ensure correct operation of the many user devices (lighting, heating, television, refrigerator, etc.) with which said vehicles are provided.

As is known, these sets use a motor (of the internal combustion type) and an electric power generator arranged downstream of the motor to convert the mechanical energy provided by the latter into the desired electric power.

The assembly constituted by the motor and the generator, being provided with various rotating elements (a flywheel and a fan, for example), must be centered perfectly with respect to some physical references, such as for example the scroll of said fan (or other casing), in order to ensure optimum operation and prevent the onset of vibrations.

For this purpose, therefore, the motor and the generator are usually fixed rigidly within a reference and protection shell with the interposition of elements (bushings or others) capable of damping vibrations.

In practice, therefore, once installation has been completed, the electric power generating set (which in turn, as shown, is constituted by the motor and by the current generator) forms a monolithic body with the shell that accommodates it, protecting it.

However, this constructive solution is not free from drawbacks.

Despite resorting to elements capable of damping vibrations, it is not possible to eliminate them completely, and therefore during the operation of the set these vibrations are transmitted to the shell, causing evident unwanted effects.

Furthermore, the need to fix rigidly the assembly composed of the motor and the generator to the shell increases significantly the complexity of the operations for assembly and installation of the generator.

Finally, it should be noted that even after completing the assembly of the generator, the rigid connections among the various components make maintenance activities (be they periodic scheduled operations or exceptional interventions caused by malfunctions or other than unexpected events) far more awkward.

JP 2004 011490 A discloses a power generating device having a combination of features as set forth in the pre-characterizing portion of the appended claim 1. Further power generating sets are disclosed in EP 1666785A1 and JP H09-217632A.

The aim of the present invention is to solve the problems described above, providing an electric power generating set that ensures correct centering with respect to the shell that contains it without transmitting vibrations thereto during operation.

Within this aim, an object of the invention is to provide an electric power generating set that can be assembled and installed easily.

Another object of the invention is to provide an electric power generating set that allows performing maintenance interventions simply and easily.

A further object of the invention is to provide an electric power generating set that maintains the correct centering of the rotating elements that are present therein even after impacts and/or overturning actions.

Another object of the invention is to provide an electric power generating set that ensures high reliability in operation and makes it possible to optimize the utilization of the power with which it is supplied.

Not the least object of the invention is to provide an electric power generating set that can be obtained easily starting from commonly commercially available elements and materials.

Another object of the invention is to provide an electric power generating set that has low costs and is safe in application.

In accordance with the invention, there is provided an electric power generating set as defined in the appended claims.

Further characteristics and advantages of the invention will become more apparent from the description of a preferred but not exclusive embodiment of the electric power generating set according to the invention, illustrated by way of non-limiting example in the accompanying drawings, wherein:

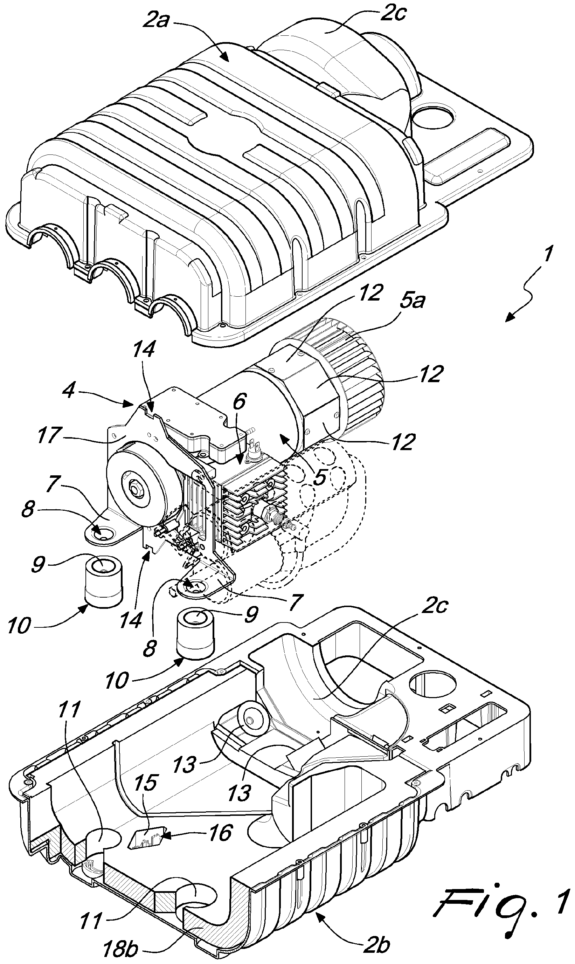

Figure 1 is a partially sectional and partially exploded perspective view of the electric power generating set according to the invention;
Figure 2 is a partially sectional front elevation view of the electric power generating set of Figure 1;
Figure 3 is a schematic partially sectional front elevation view of the electric power generating set according to the invention in the configuration for use;
Figure 4 is a highly enlarged-scale partially sectional perspective view of a detail of the electric power generating set according to the invention.

With particular reference to the cited figures, the reference numeral 1 designates generally an electric power generating set which comprises a shell 2, which forms internally an accommodation compartment 3 for a motor 4 for delivering mechanical energy, and a current generator 5, which is coupled to the motor 4. The generator 5 can thus convert the mechanical energy delivered by the motor 4 into electric power to be supplied to at least one respective user device.

Said electric power generating set 1 can thus be used, preferably but not exclusively, in vehicles such as campers, caravans, truck campers and the like, for example to recharge user devices constituted by electric batteries, with which said vehicles are equipped, in order to ensure the correct operation of the many user devices (lighting, heating, television, refrigerator, etc.) with which they are provided.

It is specified right now that although the use of the set 1 for vehicles such as the ones mentioned above is a preferred application of the invention, and for this reason reference will be made predominantly to it in the continuation of the present description, the use of the set 1 according to the invention in different fields of application is not excluded without thereby abandoning the protective scope claimed herein.

The motor 4 may be any, and can be for example any internal combustion motor, supplied with any fuel, as a function of the specific requirements; for example, with additional reference to the preferred application, the motor 4 is a two-stroke LPG-fueled engine.

The choice of this type of motor 4 in fact ensures compact size, low noise, reduced vibrations, reliability, absence of scheduled maintenance. Furthermore, as can be deduced from the accompanying figures, in order to reduce vertical space occupation the motor 4 is arranged so that its cylinder 6 is in a horizontal position.

The generator 5 can be an alternator, but in the preferred application it is constituted by a dynamo. This solution makes it possible to have direct current directly at the output, without the need to interpose a rectifier, thus making available, in a relatively simple manner, a powerful electric driver to be used also to start the electric power generating set 1 itself, without having to resort to a traditional starter motor, thus achieving a reduction in space occupation, weight and costs and a mechanical and electrical simplification.

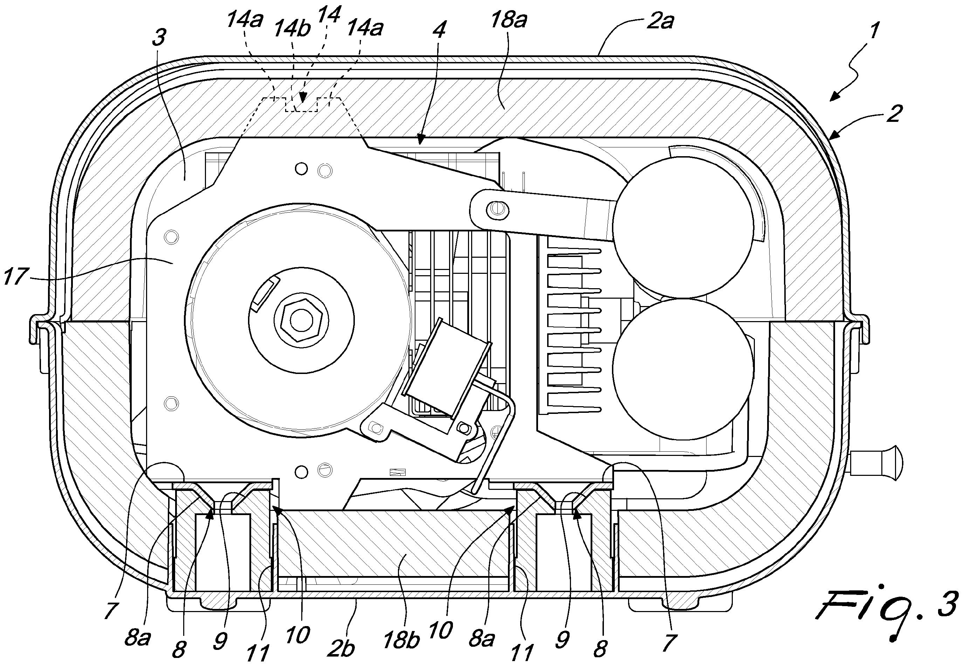

According to the invention, the motor 4 and the generator 5 rest against the shell 2, at least in a configuration for use (shown in Figure 3), at a plurality of useful surfaces, which are inclined with respect to the resting surface of the shell 2 (and therefore with respect to a horizontal plane).

More precisely, such useful surfaces are rested detachably on respective surface regions that are shaped complementarily and are associated rigidly with the shell 2: in this manner it is possible to obtain automatically by gravity the centering and reference of the motor 4 and of the generator 5 with respect to the shell 2.

Since there is furthermore no rigid connection between the shell 2 and the assembly constituted by the motor 4 and the generator 5 (which are kept centered thanks to the particular coupling method described above), any vibrations of this assembly are not transmitted to the shell 2, thus achieving already the intended aim.

In particular, the electric power generating set 1 comprises at least one lug 7, which protrudes from at least one of the motor 4 and the generator 5 and has at least one conical protrusion 8.

It is indeed the lateral surface 8a of the protrusion 8 that constitutes at least one of said useful surfaces, since it is accommodated detachably, at least in the configuration for use, in a respective flared receptacle 9, which is associated rigidly with the shell 2 and in turn constitutes at least one of the surface regions.

More particularly, in a constructive solution of considerable practical interest, proposed in the accompanying figures by way of non-limiting example of the application of the invention, the electric power generating set 1 comprises two lugs 7 that are mutually side-by-side, extend from the motor 4 and have respective conical protrusions 8.

The lateral surface 8a of each protrusion 8 thus constitutes a respective useful surface, which is accommodated detachably, at least in the configuration for use, in the corresponding flared receptacle 9; in turn, each receptacle 9 is associated rigidly with the shell 2 and constitutes one of the surface regions described above.

Usefully, in the preferred constructive solution, which does not limit the application of the invention, each receptacle 9 is provided in an end portion of a respective substantially cylindrical sleeve 10, which is made of a vibration-damping material and is coupled stably to a corresponding receptacle 11, shaped by the shell 2.

In practice, therefore, the two protrusions 8 (one for each lug 7) are accommodated in respective receptacles 9, provided in two sleeves 10 that are arranged along vertical axes (and are therefore mutually parallel).

Conveniently, at least one of the motor 4 and the generator 5 has an external enclosure that is at least partially prism-shaped: two of the flat faces 12 of said enclosure can thus constitute additional respective useful surfaces, which are rested detachably and stably, at least in the configuration for use, on respective oppositely inclined (i.e., converging) surface regions that have a complementary shape and are associated rigidly with the shell 2.

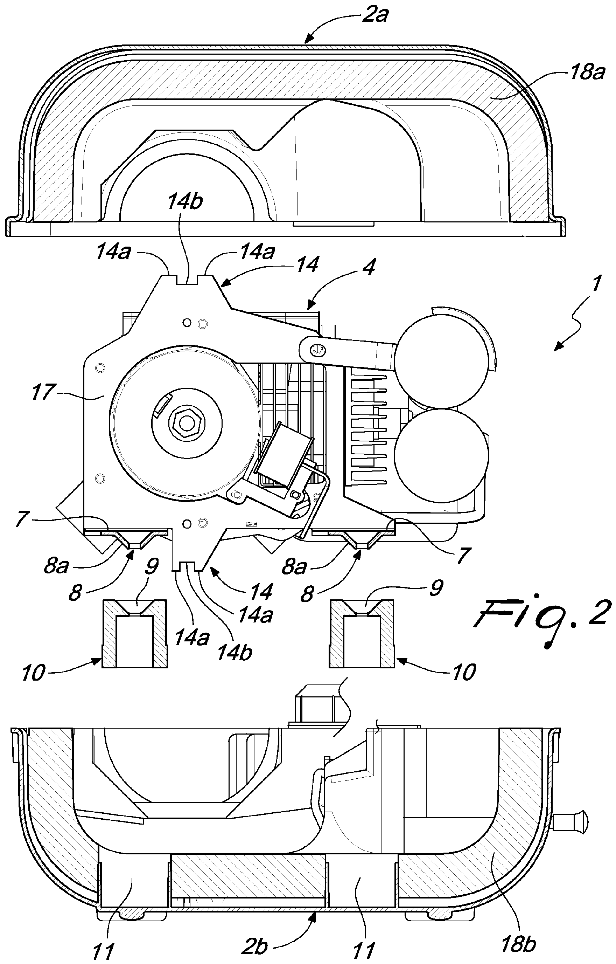

More particularly, as is evident from Figure 2, in the preferred constructive solution it is the generator 5 that has a partially prism-shaped external enclosure with an octagonal base (more precisely, the enclosure has a first portion with a cylindrical shape, which faces the motor 4, and a second portion that has an octagonal prism-like shape). In this manner, the two flat faces 12 cited above can rest detachably and stably, at least in the configuration for use, on respective ends 13 of other substantially cylindrical sleeves 10, said ends 13 thus constituting additional corresponding surface regions.

The sleeves 10 can be of the type described above, and thus be made of a vibration-damping material, and are coupled stably to corresponding additional receptacles 11, which are shaped by the shell 2 and are arranged, in this case, along axes that are oppositely inclined (perpendicular to the respective faces 12 of the enclosure of the generator 5).

Advantageously, the electric power generating set 1 comprises at least one stroke limiter, in order to contain and control the stroke allowed to the motor 4 and to the generator 5 (since, as shown, they only rest against the shell 2 without being stably anchored thereto).

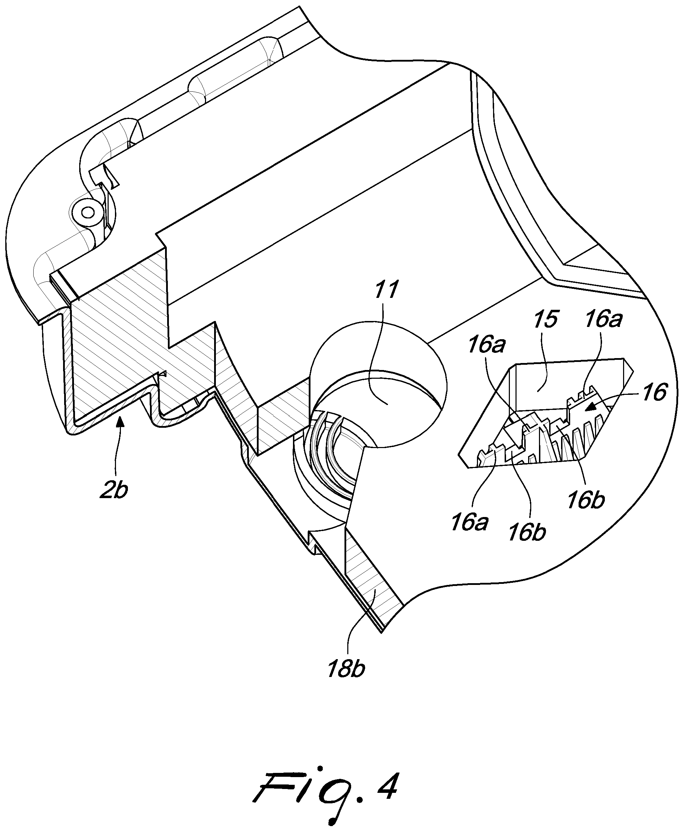

In particular, in the constructive solution proposed merely by way of example in the accompanying figures, the stroke limiter comprises a protrusion 14, which extends from at least one of the motor 4 and the generator 5 and is inserted, at least in the configuration for use, in a recess 15, which is formed inside the shell 2 (and visible in detail in Figure 4) and accommodates a contoured ridge 16, which extends from said shell 2.

As shown clearly by figures Figures 2, 3 and 4, the protrusion 14 and the ridge 16 are provided with respective terminal prongs 14a, 16a that are spaced by corresponding grooves 14b, 16b), so as to allow the mutual shape mating between the protrusion 14 and the ridge 16 at least in the configuration for use (when the protrusion 14 is inserted in the recess 15).

Thus, upon a stroke of the motor 4 and of the generator 5 beyond a predefined value, one of the protrusion 14 and the ridge 16 abuts against the prongs 14a, 16a of the other one of the protrusion 14 and the ridge 16 (as a function of the direction along which the movement occurs), in order to contain and control the stroke allowed to the motor 4 and to the generator 5 (along both directions that are parallel to the horizontal plane).

In fact, it is evident that the maximum stroke allowed to the assembly constituted by the motor 4 and the generator 5 (mutually rigidly coupled) is equal to the width of the grooves 14b, 16b that is comprised between the respective prongs 14a, 16a: any larger stroke values are prevented by the prongs 14a, 16a, which in practice define a stroke limit respectively for the ridge 16 and the protrusion 14 and therefore for the motor 4 and the generator 5 with which it is associated.

Even more particularly, and with reference to the constructive solution proposed in the accompanying figures by way of non-limiting example, the electric power generating set 1 comprises a contoured plate 17, which is applied externally on the motor 4 (on the side opposite to the generator 5).

The two side-by-side lugs 7 and two mutually opposite protrusions 14 therefore extend from the plate 17 and can be inserted, at least in the configuration for use, in corresponding recesses 15 (each of which accommodates a ridge 16), which are provided inside the shell 2.

Positively, the shell 2 is constituted substantially by a first half-shell 2a and a second half-shell 2b, which are made preferably but not exclusively of self-extinguishing polypropylene (obtained by molding), have a self-supporting function (thus avoiding the need to resort to a frame made of metal or other materials that is adapted to support the parts that compose the set 1).

It should be noted that it is possible to provide on the half-shells 2a, 2b (again by molding) also various particular accessories, which are useful or necessary for the optimum operation and assembly of the set 1 according to the invention, such as for example a duct for forced cooling air, a snap-acting fixing system for the tank, a receptacle for the connections to the user devices, etc.

Furthermore, each half-shell 2a, 2b is lined internally with a respective thermal insulation layer 18a, 18b, which is made of a sound-absorbing, thermally insulating and self-extinguishing material of variable thickness, which forms a channel for the conveyance of the cooling air, particularly at the critical points. The receptacles 11 described above and the recesses 15 described above are thus provided in said layers 18a, 18b (obtained preferably but not exclusively by molding).

Operation of the electric power generating set according to the invention is as follows.

As shown, in the electric power generating set 1 the assembly constituted by the motor 4 and the generator 5 is simply rested on the respective supports (which are integral with the shell 2 and more particularly with the second half-shell 2b). More precisely, in the configuration for use, some useful surfaces of the motor 4, which are inclined with respect to the horizontal plane and are constituted by the lateral surfaces 8a of the conical protrusions 8, are accommodated in flared portions 9 (which are in turn conical), which form respective surface regions that are shaped complementary and are associated with the shell 2.

Furthermore, the generator 5 (rigidly coupled to the motor 4) rests on the shell 2 with two faces 12 of its enclosure, which constitute additional useful surfaces and are simply rested on respective surface regions defined by the ends 13 of sleeves 10.

Therefore, the mating between the assembly constituted by the motor 4 and the generator 5 and the shell 2 is achieved, other than in known electric power generating sets, without resorting to rigid fixing elements (screws, nuts, etc.), and this allows first of all reducing or eliminating the transmission of vibrations to said shell 2, leaving said assembly free to oscillate freely.

The choice to rest the motor 4 and the generator 5 on sleeves 10 (which respectively have the flared portions 9 that accommodate the protrusions 8 and the ends 13 on which the faces 12 rest) made of vibration-damping material also contributes to this result.

At the same time, the correct centering of the various components (for example of the fan 5a of the generator 5) with respect to references that are integral with the shell 2 (for example the scroll 2c that accommodates it) is ensured by the choice to rest the motor 4 and the generator 5 against the shell 2 at useful surfaces that are inclined (with respect to the resting surface of said shell 2) and abut, as shown, against respective surface regions that are shaped complementary.

In fact, if, during assembly (or due to impacts, vibrations, oscillations, etc.) a misalignment between the parts occurs due to gravity (and therefore automatically), the useful surfaces slide on the surface regions until they move or return to the optimum position defined by design, which corresponds to the correct centering and reference of the motor 4 and of the generator 5 with respect to the shell 2.

This ensures, therefore, optimum operation as well as an additional effect that is favorable to vibration containment.

As shown, the use of stroke limiters, which contain and control the stroke allowed to the motor 4 and to the generator 5, contributes to the optimum centering and to avoiding the danger that the components might exit from their respective seats.

Moreover, for the reasons described above, if an overturning or tipping of the set 1 occurs, once the correct horizontal position (and therefore the configuration for use) has been restored, the electric power generating set 1 automatically resumes the correct centering of the rotating elements that are present therein.

Moreover, it should be noted that the lack of rigid couplings between the shell 2 and the assembly constituted by the motor 4 and the generator 5, which are simply rested on the second half-shell 2b, allows of course a considerable simplification of the operations for the assembly and installation of the set 1 according to the invention and facilitates considerably its maintenance operations.

Finally, it is specified that the channels provided within the half-shells 2a, 2b are capable of utilizing the heat released by the thermal motor 4 and by the generator 5 in order to heat, where necessary, sensitive parts of the vehicle on which the set 1 is installed which are external to the cabin, such as for example the chamber for accommodating the drive unit or the wastewater drain valves.

This allows using, at least partially, the amount of energy that otherwise would be dispersed by the motor 4, which, as is known, is able to deliver and make available to the generator 5 a quantity of mechanical energy that is only a minimum fraction of the energy with which it is supplied.

In practice it has been found that the electric power generating set according to the invention achieves fully the intended aim, since the use of a motor and a generator which, at least in a configuration for use, rest against the respective shell at a plurality of useful surfaces that are inclined with respect to the resting surface of said shell and are detachably rested against respective surface regions that are shaped complementary and rigidly associated with the latter, makes it possible to provide an electric power generating set that ensures correct centering with respect to the shell that contains it, without transmitting vibrations thereto during operation.

The invention thus conceived is susceptible of numerous modifications and variations, all of which are within the scope of the appended claims; all the details may furthermore be replaced with other technically equivalent elements.

In the exemplary embodiment shown, individual characteristics, given in relation to specific examples, may actually be interchanged with other different characteristics that exist in other exemplary embodiments.

In practice, the materials used, as well as the dimensions, may be any according to the requirements and the state of the art.

Where technical features mentioned in any claim are followed by reference signs, those reference signs have been included for the sole purpose of increasing the intelligibility of the claims and accordingly such reference signs do not have any limiting effect on the interpretation of each element identified by way of example by such reference signs.

## Claims

1. An electric power generating set, comprising a shell (2) that forms internally an accommodation compartment (3) for a motor (4) for delivering mechanical energy, and a current generator (5), which is coupled to said motor (4), for converting the mechanical energy delivered by said motor (4) into electric power, to be supplied to at least one respective user device, said motor (4) and said generator (5) resting detachably on respective surface regions that are shaped complementary and are associated rigidly with said shell (2) for the automatic centering and reference of said motor (4) and of said generator (5) with respect to said shell (2), the electric power generating set being **characterized in that** said motor (4) and said generator (5) rest on said shell (2) at a plurality of useful surfaces, which are inclined with respect to the resting surface of said shell (2), and the electric power generating set further comprising at least one lug (7) that extends from at least one of said motor (4) and said generator (5), said lug (7) having at least one conical protrusion (8), the lateral surface (8a) of said protrusion (8) constituting at least one of said useful surfaces, which is accommodated detachably in a respective flared receptacle (9), which is associated rigidly with said shell (2) and constitutes at least one of said surface regions.

2. The electric power generating set according to claim 1, **characterized in that** it comprises two of said lugs (7) which are arranged mutually side by side, extend from said motor (4) and have said respective conical protrusions (8), the lateral surface (8a) of each one of said protrusions (8) constituting a respective useful surface, which is accommodated detachably in a corresponding flared receptacle (9), which is associated rigidly with said shell (2) and constitutes one of said surface regions.

3. The electric power generating set according to one or more of the preceding claims, **characterized in that** each one of said receptacles (9) is provided in an end portion of a respective substantially cylindrical sleeve (10), made of a vibration-damping material, which is coupled stably to a corresponding receptacle (11) that is formed by said shell (2).

4. The electric power generating set according to claim 1, **characterized in that** at least one of said motor (4) and said generator (5) has an external enclosure that is at least partially prism-shaped, two of the flat faces (12) of said enclosure constituting said respective useful surfaces, which rest detachably and stably on respective oppositely inclined and complementary shaped surface regions that are rigidly associated with said shell (2).

5. The electric power generating set according to claim 4, **characterized in that** said generator (5) has a partially prism-like external enclosure with an octagonal base, said two flat faces (12) of said enclosure resting stably and detachably on respective ends (13), which constitute said surface regions, of substantially cylindrical sleeves (10), made of a vibration-damping material, which are coupled stably to corresponding receptacles (11) that are shaped by said shell (2) and are arranged along oppositely inclined axes.

6. The electric power generating set according to one or more of the preceding claims, **characterized in that** it comprises at least one stroke limiter for containing and controlling the stroke allowed to said motor (4) and to said generator (5).

7. The electric power generating set according to claim 6, **characterized in that** said at least one stroke limiter comprises a protrusion (14), which extends from at least one of said motor (4) and said generator (5) and is inserted in a recess (15) that is provided inside said shell (2) and accommodates a contoured ridge (16), which extends from said shell (2), said protrusion (14) and said ridge (16) having respective terminal prongs (14a, 16a) that are spaced by corresponding grooves (14b, 16b) for mutual shape mating between said protrusion (14) and said ridge (16) at a stroke of said motor (4) and of said generator (5) beyond a preset value, one of said protrusion (14) and said ridge (16) abutting against said prongs (14a, 16a) of the other one of said protrusion (14) and said ridge (16), in order to contain and control the stroke allowed to said motor (4) and to said generator (5).

8. The electric power generating set according to one or more of the preceding claims, **characterized in that** it comprises a contoured plate (17), which is applied externally on said motor (4), said two side-by-side lugs (7) and two of said mutually opposite protrusions (14), inserted, at least in said configuration for use, in said corresponding recesses (15) provided inside said shell (2), protruding from said plate (17).

9. The electric power generating set according to one or more of the preceding claims, **characterized in that** said shell (2) is constituted substantially by a first half-shell (2a) and a second half-shell (2b), each one of said half-shells (2a, 2b) being lined internally by a respective thermal insulation layer (18a, 18b), made of a self-extinguishing, soundproofing and thermally insulating material and forming a channel for the conveyance of the cooling air, said receptacles (11) and said recesses (15) being provided in said layers (18a, 18b).

## Patentansprüche

1. Ein Stromerzeugungssatz, der ein Gehäuse (2) umfasst, welches in seinem Inneren ein Aufnahmefach (3) für einen Motor (4) zur Erzeugung mechanischer Energie bildet, und einen Stromgenerator (5), der mit dem Motor (4) gekoppelt ist, um die von dem Motor (4) erzeugte mechanische Energie in elektrischen Strom umzuwandeln, der mindestens einer entsprechenden Benutzervorrichtung zugeführt werden soll; wobei der Motor (4) und der Generator (5) abnehmbar auf entsprechenden Oberflächenbereichen aufliegen, die komplementär geformt und starr mit dem Gehäuse (2) verbunden sind, zur automatischen Zentrierung und Referenz des Motors (4) und des Generators (5) mit Bezug auf das Gehäuse (2); wobei der Stromerzeugungssatz **dadurch gekennzeichnet ist, dass** der Motor (4) und der Generator (5) an einer Vielzahl von Nutzflächen an dem Gehäuse (2) anliegen, die im Verhältnis zur Auflagefläche des Gehäuses (2) geneigt sind; und wobei der Stromerzeugungssatz weiter mindestens eine Nase (7) umfasst, die sich von dem Motor (4) und/oder dem Generator (5) erstreckt, wobei die Nase (7) mindestens einen kegelförmigen Vorsprung (8) hat, wobei die Seitenfläche (8a) des Vorsprungs (8) mindestens eine der Nutzflächen bildet, die herausnehmbar in einem entsprechenden erweiterten Sitz (9) aufgenommen ist, welcher starr mit dem Gehäuse (2) verbunden ist und mindestens einen der Oberflächenbereiche bildet.

2. Der Stromerzeugungssatz gemäß Anspruch 1, **dadurch gekennzeichnet, dass** er zwei der Nasen (7) umfasst, die nebeneinander angeordnet sind, sich von dem Motor (4) erstrecken und die entsprechenden kegelförmigen Vorsprünge (8) haben, wobei die Seitenfläche (8a) jedes der Vorsprünge eine entsprechende Nutzfläche bildet, die herausnehmbar in einem entsprechenden erweiterten Sitz (9) aufgenommen ist, welcher starr mit dem Gehäuse (2) verbunden ist und einen der Oberflächenbereiche bildet.

3. Der Stromerzeugungssatz gemäß einem oder mehreren der obigen Ansprüche, **dadurch gekennzeichnet, dass** jeder der Sitze (9) in einem Endabschnitt einer dazugehörigen im Wesentlichen zylindrischen Hülse (10) aus schwingungsdämpfendem Material angebracht ist, die fest mit einer entsprechenden Aufnahme (11) gekoppelt ist, welche von dem Gehäuse (2) geformt ist.

4. Der Stromerzeugungssatz gemäß Anspruch 1, **dadurch gekennzeichnet, dass** der Motor (4) und/oder der Generator (5) ein Außengehäuse haben, das zumindest teilweise prismatisch ist, wobei zwei der flachen Flächen (12) des Gehäuses die entsprechenden Nutzflächen bilden, die abnehmbar und fest an entsprechenden in Gegenrichtung geneigten und komplementär geformten Oberflächenbereichen anliegen, die starr mit dem Gehäuse (2) verbunden sind.

5. Der Stromerzeugungssatz gemäß Anspruch 4, **dadurch gekennzeichnet, dass** der Generator (5) ein teilweise prismatisches Außengehäuse mit achteckiger Basis hat, wobei die zwei flachen Flächen (12) des Gehäuses fest und abnehmbar an entsprechenden die Oberflächenbereiche bildenden Enden (13) im Wesentlichen zylindrischer Hülsen (10) aus vibrationsdämpfendem Material anliegen, die fest mit entsprechenden Aufnahmen (11) gekoppelt sind, welche von dem Gehäuse (2) geformt sind, und entlang entgegengesetzt geneigten Achsen angeordnet sind.

6. Der Stromerzeugungssatz gemäß einem oder mehreren der obigen Ansprüche, **dadurch gekennzeichnet, dass** er mindestens einen Hubbegrenzer zum Begrenzen und Kontrollieren des Hubs umfasst, der dem Motor (4) und dem Generator (5) gestattet ist.

7. Der Stromerzeugungssatz gemäß Anspruch 6, **dadurch gekennzeichnet, dass** der mindestens eine Hubbegrenzer einen Vorsprung (14) umfasst, der sich von dem Motor (4) und/oder dem Generator (5) erstreckt und in eine Vertiefung (15) eingeführt ist, welche innerhalb des Gehäuses (2) angebracht ist und einen konturierten Grat (16) aufnimmt, der sich von dem Gehäuse (2) erstreckt; wobei der Vorsprung (14) und der Grat (16) entsprechende Endzinken (14a, 16a) haben, die durch entsprechende Nuten (14b, 16b) beabstandet sind, zur Formpassung des Vorsprungs (14) und des Grats (16) miteinander bei einem Hub des Motors (4) und des Generators (5) über einen voreingestellten Wert hinaus; wobei entweder der Vorsprung (14) oder der Grat (16) an die Zinken (14a, 16a) des jeweils anderen des Vorsprungs (14) und des Grats (16) anstoßen, um den Hub zu begrenzen und zu kontrollieren, der dem Motor (4) und dem Generator (5) gestattet ist.

8. Der Stromerzeugungssatz gemäß einem oder mehreren der obigen Ansprüche, **dadurch gekennzeichnet, dass** er eine konturierte Platte (17) umfasst, die außen an dem Motor (4) angebracht ist, wobei die zwei nebeneinander liegenden Nasen (7) und zwei der einander gegenüberliegenden Vorsprünge (14), zumindest in der Nutzungskonfiguration in die entsprechenden Vertiefungen (15) in dem Gehäuse (2) eingesetzt, aus der Platte (17) herausragen.

9. Der Stromerzeugungssatz gemäß einem oder mehreren der obigen Ansprüche, **dadurch gekennzeichnet, dass** das Gehäuse (2) im Wesentlichen aus einer ersten Halbschale (2a) und einer zweiten Halbschale (2b) besteht, wobei jede der Halbschalen (2a, 2b) innen mit einer entsprechenden Wärmeisolierschicht (18a, 18b) ausgekleidet ist, die aus einem selbstlöschenden, schalldämpfenden und wärmeisolierenden Material besteht, und einen Kanal für den Transport der Kühlluft bildend, wobei die Aufnahmen (11) und die Vertiefungen (15) in den Schichten (18a, 18b) angebracht sind.

## Revendications

1. Ensemble de production d'énergie électrique, comprenant une enveloppe (2), qui forme à l'intérieur un compartiment formant logement (3) pour un moteur (4), pour délivrer de l'énergie mécanique et un générateur de courant (5), qui est couplé audit moteur (4), pour convertir l'énergie mécanique, délivrée par ledit moteur (4), en énergie électrique, à fournir à au moins un dispositif utilisateur respectif, ledit moteur (4) et ledit générateur (5) reposant de manière amovible sur des zones respectives de la surface qui sont formées de manière complémentaire et sont associées de manière rigide à ladite enveloppe (2) pour le centrage et la référence automatiques dudit moteur (4) et dudit générateur (5) par rapport à ladite enveloppe (2), l'ensemble de production d'énergie électrique étant
**caractérisé en ce que**
ledit moteur (4) et ledit générateur (5) reposent sur ladite enveloppe (2) en une pluralité de surfaces utiles, qui sont inclinées par rapport à la surface de repos de ladite enveloppe (2) et l'ensemble de production d'énergie électrique comprenant en outre au moins une oreille (7), qui s'étend depuis au moins un élément parmi ledit moteur (4) et ledit générateur (5), ladite oreille (7) ayant au moins une protubérance conique (8), la surface latérale (8a) de ladite protubérance (8) constituant au moins l'une desdites surfaces utiles, qui est logée de manière amovible dans un réceptacle évasé (9) respectif, qui est associé de manière rigide à ladite enveloppe (2) et constitue au moins l'une desdites zones de la surface.

2. Ensemble de production d'énergie électrique selon la revendication 1,
**caractérisé en ce**
**qu'**il comprend deux desdites oreilles (7) qui sont agencées mutuellement côte à côte, s'étendent depuis ledit moteur (4) et ont lesdites protubérances coniques (8) respectives, la surface latérale (8a) de chacune desdites protubérances (8) constituant une surface utile respective, qui est logée de manière amovible dans un réceptacle évasé (9) correspondant, qui est associé de manière rigide à ladite enveloppe (2) et constitue l'une desdites zones de la surface.

3. Ensemble de production d'énergie électrique selon une ou plusieurs des revendications précédentes,
**caractérisé en ce que**
chacun desdits réceptacles (9) est prévu dans une partie terminale d'un manchon sensiblement cylindrique (10) respectif, fait dans un matériau amortissant les vibrations, qui est couplé de manière stable à un réceptacle (11) correspondant, qui est formé par ladite enveloppe (2).

4. Ensemble de production d'énergie électrique selon la revendication 1,
**caractérisé en ce**
**qu'**au moins un élément parmi ledit moteur (4) et ledit générateur (5) a une enceinte extérieure, qui est au moins partiellement en forme de prisme, deux des faces plates (12) de ladite enceinte constituant lesdites surfaces utiles respectives, qui reposent de manière amovible et stable sur des zones respectives de la surface, formées à l'opposé de façon inclinée et complémentaire, qui sont associées de manière rigide à ladite enveloppe (2).

5. Ensemble de production d'énergie électrique selon la revendication 4,
**caractérisé en ce que**
ledit générateur (5) a une enceinte extérieure partiellement en forme de prisme, avec une base octogonale, lesdites deux faces plates (12) de ladite enceinte reposant de manière stable et amovible sur des extrémités (13) respectives, qui constituent lesdites zones de la surface de manchons sensiblement cylindriques (10), faits dans un matériau amortissant les vibrations, qui sont couplés de manière stable à des réceptacles (11) correspondants, qui sont formés par ladite enveloppe (2) et sont agencés le long d'axes inclinés opposés.

6. Ensemble de production d'énergie électrique selon une ou plusieurs des revendications précédentes,
**caractérisé en ce**
**qu'**il comprend au moins un limiteur de course, destiné à contenir et commander la course autorisée pour ledit moteur (4) et pour ledit générateur (5).

7. Ensemble de production d'énergie électrique selon la revendication 6,
**caractérisé en ce que**
ledit au moins un limiteur de course comprend une protubérance (14), qui s'étend depuis au moins un élément parmi ledit moteur (4) et ledit générateur (5) et est inséré dans un évidement (15), qui est prévu à l'intérieur de ladite enveloppe (2) et loge une arête profilée (16), qui s'étend depuis ladite enveloppe (2), ladite protubérance (14) et ladite arête (16) ayant des dents terminales (14a, 16a) respectives, qui sont espacées par des rainures (14b, 16b) correspondantes pour un accouplement de forme mutuel entre ladite protubérance (14) et ladite arête (16) lors d'une course dudit moteur (4) et dudit générateur (5) au-delà d'une valeur préréglée, un élément parmi ladite protubérance (14) et ladite arête (16) venant en butée contre lesdites dents (14a, 16a) de l'autre élément parmi ladite protubérance (14) et ladite arête (16), afin de contenir et commander la course autorisée pour ledit moteur (4) et ledit générateur (5).

8. Ensemble de production d'énergie électrique selon une ou plusieurs des revendications précédentes,
**caractérisé en ce**
**qu'**il comprend une plaque profilée (17), qui est appliquée à l'extérieur sur ledit moteur (4), lesdites deux oreilles côte à côte (7) et deux desdites protubérances (14) mutuellement opposées, insérées, au moins dans ladite configuration pour utilisation, dans les évidements (15) correspondants, prévus à l'intérieur de ladite enveloppe (2), faisant saillie depuis ladite plaque (17).

9. Ensemble de production d'énergie électrique selon une ou plusieurs des revendications précédentes,
**caractérisé en ce que**
ladite enveloppe (2) est constituée sensiblement par une première demi-enveloppe (2a) et une seconde demi-enveloppe (2b), chacune desdites demi-enveloppes (2a, 2b) étant doublée à l'intérieur par une couche d'isolation thermique (18a, 18b) respective, faite d'un matériau auto-extinguible, insonorisé et thermo-isolant et formant un canal pour le transport de l'air de refroidissement, lesdits réceptacles (11) et lesdits évidements (15) étant prévus dans lesdites couches (18a, 18b).
